# EUROPÄISCHE PATENTSCHRIFT

(11) **EP 3 528 305 B1**
(45) Veröffentlichungstag und Bekanntmachung des Hinweises auf die Patenterteilung: **04.01.2023**
(21) Anmeldenummer: 18157595.2
(22) Anmeldetag: 20.02.2018
(51) Int. Cl.: H01M 50/249, H01M 50/233, B60L 50/64

(54) **VERWENDUNG VON ANTRIEBSBATTERIEN IN KRAFTFAHRZEUGEN**
USE OF DRIVE BATTERIES IN VEHICLES
UTILISATION DE BATTERIE DE TRACTION DANS DES VÉHICULES

(43) Veröffentlichungstag der Anmeldung: 21.08.2019
(73) Patentinhaber: MAGNA STEYR Fahrzeugtechnik GmbH & Co KG, 8041 Graz (AT)
(72) Erfinder: ERLACHER, Manuel, 9545 Radenthein (AT)
(74) Vertreter: Zangger, Bernd

(56) Entgegenhaltungen:
- DE-A1-102016 209 853
- US-A1- 2017 170 438
- US-A1- 2018 029 493

## Beschreibung

### Gebiet der Erfindung

Die vorliegende Erfindung betrifft eine Verwendung von gleichartigen Antriebsbatterien in einem ersten Kraftfahrzeug, wobei das erste Kraftfahrzeug mit einem Frontantrieb ausgestattet ist und in einem zweiten Kraftfahrzeug, wobei das zweite Kraftfahrzeug mit einem Heckantrieb ausgestattet ist.

### Stand der Technik

Antriebsbatterien für Kraftfahrzeuge sind seit einiger Zeit bekannt und werden in elektrisch angetriebenen Fahrzeugen, wie Elektro- und Hybridfahrzeugen eingesetzt. Derartige Antriebsbatterien sind für größere Leistungen ausgebildet und werden daher durch sogenannte "Hochvoltbatterien" gebildet. Üblicherweise umfassen solche Antriebsbatterien eine größere Anzahl von Batteriemodulen, die miteinander verschaltet sind und an einem gemeinsamen elektrischen Anschluss der Antriebsbatterie die erforderliche hohe Spannung abgeben können.

Solche Antriebsbatterien benötigen üblicherweise einen relativ großen Bauraum und werden beispielsweise als Flachbatterien im Bereich eines Unterbodens eines Kraftfahrzeuges verbaut.

Zur Erhöhung der Sicherheit, insbesondere bei einem Unfall des Kraftfahrzeuges, ist es bekannt Verstärkungen rund um Antriebsbatterien in einem Fahrzeug anzuordnen, oder auch innerhalb der Antriebsbatterien selbst.

Kraftfahrzeuge werden heutzutage auch oft in unterschiedlichen Ausstattungsvarianten und insbesondere mit unterschiedlichen Antriebsvarianten auf einer gemeinsamen Fahrzeugplattform angeboten. So kann ein bestimmter Fahrzeugtyp beispielsweise mit Frontantrieb und mit Heckantrieb angeboten werden.

Für unterschiedliche Antriebsvarianten müssen üblicherweise unterschiedliche Antriebsbatterien verbaut werden und/oder es müssen zusätzliche elektrische Leitungen bzw. Heiz-/ oder Kühlleitungen verlegt werden um von der Position eines elektrischen Anschlusses oder Heiz-/Kühlanschlusses der Antriebsbatterie zum Antrieb zu gelangen. Berechnungen zur Fahrzeugsicherheit müssen für jede Antriebsanordnung und insbesondere für jede Lage von Versteifungen des Kraftfahrzeuges erneut durchgeführt werden.

Aus der DE 10 2016 209853 A1 ist eine Unterschale für ein Batteriegehäuse einer Traktionsbatterie bekannt, mit einer aus gefaltetem Metallblech gebildeten Wanne, die ein Bodenblech und durch Abkantung aufgestellte Seitenwände aufweist, und mehreren aus Metallblech gebildeten Einsätzen, die die Wanne in einzelne Fächer unterteilen, wobei die Einsätze sowohl mit dem Bodenblech als auch mit den Seitenwänden gefügt sind.

Die US 2017/170438 A1 offenbart ein System für ein Fahrzeug, umfassend ein mit dem Fahrzeug verbundenes Gehäuse, wobei das Gehäuse einen Boden und eine Mehrzahl von Außenwänden aufweist, mindestens eine Trennwand innerhalb des Gehäuses, die das Gehäuse in eine Vielzahl von Abschnitten unterteilt; und eine Mehrzahl von Batteriemodulen, die innerhalb des Gehäuses angeordnet sind, wobei die Batteriemodule länglich sind und eine Höhe aufweisen, die durch eine längste Achse der Batteriemodule definiert ist, die größer ist als eine Breite oder Länge der Batteriemodule; und wobei die Batteriemodule in einer vertikalen Ausrichtung innerhalb des Gehäuses angeordnet sind, so dass die längste Achse der Batteriemodule im Allgemeinen senkrecht zu einer Bodenfläche ist, auf der das Fahrzeug fährt.

Die US 2018/029493 A1 lehrt ein Batteriepack für ein elektrisches Fahrzeug, umfassend eine Grundplatte; eine Mehrzahl von rechteckigen Batteriemodulen, die seitlich nebeneinander angeordnet sind, einen Befestigungsgurt, der für jedes Batteriemodul vorgesehen ist und einen oberen Abschnitt, der sich entlang einer oberen Fläche des entsprechenden Batteriemoduls in einer Vorwärts- und Rückwärtsrichtung erstreckt, einen vorderen Abschnitt, der sich von einem vorderen Ende des oberen Abschnitts entlang einer vorderen Fläche des entsprechenden Batteriemoduls nach unten erstreckt, einen hinteren Abschnitt, der sich von einem hinteren Ende des oberen Abschnitts entlang einer hinteren Fläche des entsprechenden Batteriemoduls nach unten erstreckt, einen vorderen Befestigungsabschnitt, der in einem unteren Ende des vorderen Abschnitts ausgebildet und an der Grundplatte befestigt ist, einen hinteren Befestigungsabschnitt, der in einem unteren Ende des hinteren Abschnitts ausgebildet und an der Grundplatte befestigt ist, und eine Verbindungsplatte, die sich seitlich erstreckt und fest mit den Befestigungsgurten verbunden ist.

### Zusammenfassung der Erfindung

Es ist eine Aufgabe der Erfindung, eine Verwendung von gleichartigen Antriebsbatterien in einem ersten Kraftfahrzeug, wobei das erste Kraftfahrzeug mit einem Frontantrieb ausgestattet ist und in einem zweiten Kraftfahrzeug, wobei das zweite Kraftfahrzeug mit einem Heckantrieb ausgestattet ist, anzugeben, wobei die Antriebsbatterie für unterschiedliche Antriebsvarianten optimiert ausgebildet ist und dabei keine erneuten Berechnungen zur Fahrzeugsicherheit erforderlich sind.

Die Lösung der Aufgabe erfolgt durch eine Verwendung von gleichartigen Antriebsbatterien mit den Merkmalen gemäß Anspruch 1.

Erfindungsgemäß ist eine Verwendung von gleichartigen Antriebsbatterien in einem ersten Kraftfahrzeug, wobei das erste Kraftfahrzeug mit einem Frontantrieb ausgestattet ist und in einem zweiten Kraftfahrzeug, wobei das zweite Kraftfahrzeug mit einem Heckantrieb ausgestattet ist, wobei die Antriebsbatterie jeweils ein Batteriegehäuse, mehrere Batteriemodule im Batteriegehäuse, einen Anschluss der Antriebsbatterie und zumindest einen, bevorzugt mehrere Querträger im Batteriegehäuse zur Verstärkung der Antriebsbatterie in Fahrzeugquerrichtung umfasst, wobei die Gesamtheit der Querträger symmetrisch gegenüber einer Rotation der Antriebsbatterie um eine vertikale Achse um 180 Grad angeordnet ist, so dass die Querträger nach einer derartigen Rotation an den selben Positionen in Fahrzeuglängsrichtung zu liegen kommen, wie vor der Rotation, wobei die Antriebsbatterie im zweiten Kraftfahrzeug um eine vertikale Achse um 180 Grad gedreht ist, gegenüber der Anordnung der Antriebsbatterie im ersten Kraftfahrzeug, so dass die Querträger im zweiten Kraftfahrzeug an den selben Positionen in Fahrzeuglängsrichtung liegen, wie im ersten Kraftfahrzeug.

Erfindungsgemäß weist eine Antriebsbatterie in einem Batteriegehäuse zumindest einen, bevorzugt aber zumindest zwei, besonders bevorzugt mehr als zwei Querträger zur Versteifung auf, die, in vorgesehener Einbaulage der Antriebsbatterie gesehen, in einer Fahrzeugquerrichtung verlaufen.

Bevorzugt hat die Antriebsbatterie in Draufsicht im Wesentlichen eine rechteckige, beispielsweise quadratische Form und die Querträger verlaufen parallel zur kürzeren Seite des Rechteckes, von einer Längsseite zur gegenüberliegenden Längsseite des Rechteckes.

Die Querträger sind erfindungsgemäß so in der Batterie angeordnet, dass, nach einer Rotation der Antriebsbatterie um eine vertikale Achse um 180 Grad, also nach einer Drehung der im Fahrzeug vorne liegenden Seite der Antriebsbatterie nach hinten und umgekehrt, die Querträger an den selben Positionen in Fahrzeuglängsrichtung zu liegen kommen, wie vor dieser Rotation. Dabei muss natürlich nicht jeder einzelne Querträger wieder an der selben Position wie vor der Drehung liegen, sondern es wird für die meisten Querträger ein anderer Querträger an derjenigen Position in Fahrzeuglängsrichtung zu liegen kommen, an welcher der Querträger sich vor der Rotation befand. Lediglich ein in Längsrichtung mittig angeordneter Querträger wird nach der Drehung selbst an der selben Position in Längsrichtung zu liegen kommen.

Bei einer Antriebsbatterie mit nur einem Querträger, liegt dieser daher mittig in Längsrichtung.

Vorzugsweise hat die Antriebsbatterie aber mehrere Querträger. Diese sind vorzugsweise jeweils in gleichen Abständen zu beiden Seiten von der Mitte des Batteriegehäuses, in Fahrzeuglängsrichtung, entfernt angeordnet.

Durch diese Anordnung der Querträger der Antriebsbatterie kann die selbe Antriebsbatterie in einem Fahrzeug mit Heckantrieb und einem Fahrzeug mit Frontantrieb verwendet werden und daher das gleiche Bauteil in höherer Stückzahl produziert werden. Im Fahrzeug mit Heckantrieb kann die Batterie im Vergleich zu einem Fahrzeug mit Frontantrieb um 180 Grad gedreht angeordnet werden, so dass der Anschluss der Batterie, insbesondere ein elektrischer Anschluss und/oder ein Heizanschluss und/oder ein Kühlanschluss, in beiden Antriebsvarianten nur wenig entfernt vom Antrieb des Fahrzeuges zu liegen kommt und nur kurze Verbindungsleitungen benötigt werden. Da dabei die Querträger der Antriebsbatterie bei beiden Antriebsvarianten an den selben Positionen zu liegen kommen, ist eine erneute Berechnung der Eigenschaften, insbesondere des Unfallverhaltens der lastaufnehmenden Versteifungen nicht erforderlich.

Bevorzugt sind alle Querträger in regelmäßigen Abständen in Fahrzeuglängsrichtung im Batteriegehäuse angeordnet.

Besonders bevorzugt umfasst die Antriebsbatterie zusätzlich zumindest einen, bevorzugt mehrere Längsträger im Batteriegehäuse zur Verstärkung der Antriebsbatterie in Einbaulage in Fahrzeuglängsrichtung, wobei die Gesamtheit der Längsträger symmetrisch gegenüber einer Rotation der Antriebsbatterie um eine vertikale Achse um 180 Grad angeordnet ist, so dass die Längsträger nach einer derartigen Rotation an den selben Positionen in Fahrzeugquerrichtung zu liegen kommen, wie vor der Rotation. Analog zu den Querträgern können auch Längsträger daher so im Batteriegehäuse angeordnet sein, dass die Versteifungscharakteristik bei Drehung der Batterie um 180 Grad nicht geändert wird.

Alle Längsträger sind dann bevorzugt in regelmäßigen Abständen in Fahrzeugquerrichtung im Batteriegehäuse angeordnet.

Vorzugsweise bilden die Querträger und die Längsträger zusammen ein regelmäßiges, rechtwinkeliges Gitter, mit zueinander gleichen Abständen in Fahrzeuglängsrichtung einerseits und mit zueinander gleichen Abständen in Fahrzeugquerrichtung andererseits.

Bevorzugt ist der Anschluss, insbesondere ein elektrischer Anschluss, an einer Stirnseite des Batteriegehäuses angeordnet. Bevorzugt ist zusätzlich auch ein Kühlanschluss an der selben Stirnseite des Batteriegehäuses angeordnet wie der elektrische Anschluss. Durch das Drehen der Batterie um 180 Grad kommen die jeweiligen Anschlüsse dadurch nahe der Frontseite bzw. der Heckseite des Fahrzeuges zu liegen.

Die Batteriemodule sind bevorzugt in Zwischenräumen zwischen den Querträgern und gegebenenfalls zwischen den Längsträgern angeordnet.

Vorzugsweise ist im ersten Kraftfahrzeug mit Frontantrieb der Anschluss der Antriebsbatterie näher der Front des Fahrzeuges angeordnet, insbesondere an einer vorderen Seitenwand des Batteriegehäuses und ist im zweiten Kraftfahrzeug mit Heckantrieb der Anschluss der Antriebsbatterie näher dem Heck des Fahrzeuges angeordnet, insbesondere an einer hinteren Seitenwand des Batteriegehäuses, so dass der Anschluss, insbesondere ein elektrischer Anschluss und/oder ein Heiz- und/oder Kühlanschluss der Antriebsbatterie, jeweils nahe des Antriebs angeordnet ist.

Der "Anschluss" ist nicht auf eine einzige elektrische und /oder mechanische Kontaktierung oder bloß einen Stecker eingeschränkt, sondern kann beispielsweise einen oder zwei Anschlussstecker oder Anschlussklemmen für die beiden Batteriepole und /oder für den Kühlkreislauf/Heizkreislauf der Batterie umfassen.

### Kurzbeschreibung der Zeichnungen

Die Erfindung wird im Folgenden beispielhaft unter Bezugnahme auf die Zeichnungen beschrieben.
- Fig. 1: ist eine schematische Schnittansicht einer erfindungsgemäßen Verwendung von gleichartigen Antriebsbatterien in einem ersten Kraftfahrzeug mit Frontantrieb und einem zweiten Kraftfahrzeug mit Heckantrieb.
- Fig. 2a: sind Ansichten die eine Antriebsbatterie für eine erfindungsgemäße Verwendung von oben, von vorne und von der Seite zeigen.
- Fig. 2b: ist eine dreidimensionale Ansicht der Antriebsbatterie gemäß Fig. 2a.
- Fig. 3a: sind Ansichten die eine erfindungsgemäße Antriebsbatterie von oben, von vorne und von der Seite zeigen, entsprechend Fig. 2a, jedoch ohne Batteriedeckel.
- Fig. 3b: ist eine dreidimensionale Ansicht der Antriebsbatterie gemäß Fig. 3a.
- Fig. 4: ist eine Ansicht der Antriebsbatterie gemäß Fig. 3a von oben, mit eingezeichneten Lastpfaden über die Querträger (oben) und über die Längsträger (unten).
- Fig. 5: ist eine schematische Ansicht der Antriebsbatterie gemäß Fig. 3a von unten, in Einbaulage in einem Fahrzeug mit Frontantrieb (oben) und in einem Fahrzeug mit Heckantrieb (unten).

### Detaillierte Beschreibung der Erfindung

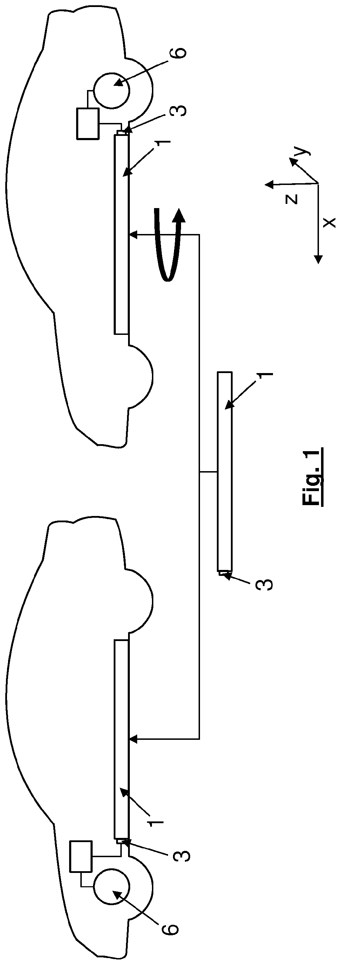

In Fig. 1 ist schematisch die Anordnung einer Antriebsbatterie in einem ersten Kraftfahrzeug mit Frontantrieb (links) und in einem zweiten Kraftfahrzeug mit Heckantrieb (rechts) dargestellt. Die Antriebsbatterie weist ein Batteriegehäuse 1 auf und ist als Flachspeicher mit rechteckigem Grundriss ausgebildet, der im Bereich eines Unterbodens des Kraftfahrzeuges angeordnet ist. An einer Stirnseite der Antriebsbatterie weist diese zumindest einen, vorzugsweise elektrischen, Anschluss 3 auf. Dieser besteht aus einem positiven und einem negativen Anschlusspol der Antriebsbatterie. Der Anschluss 3 kann zusätzlich oder alternativ Anschlüsse zur Verbindung der Batterie mit einem Kühl- und / oder Heizsystem des Fahrzeuges aufweisen, insbesondere benachbart oder kombiniert mit den elektrischen Anschlüssen. Das Fahrzeug mit Frontantrieb umfasst in der Front des Fahrzeuges einen elektrischen Antriebsmotor 6. Der elektrische Anschluss 3 der Antriebsbatterie ist an einer Stirnseite des Batteriegehäuses 1 angeordnet, der dem elektrischen Antriebsmotor 6 zugewandt ist, so dass nur kurze Verbindungsleitungen zwischen Antriebsbatterie und Antriebsmotor 6 erforderlich sind.

Das Fahrzeug in der rechten Abbildung der Fig. 1 weist einen elektrischen Antriebsmotor 6 im Heck des Fahrzeuges auf. Hierzu ist erfindungsgemäß die Antriebsbatterie im Vergleich zur Einbaulage im Frontgetriebenen Fahrzeug um eine vertikale Achse um 180 Grad gedreht, so dass der elektrische Anschluss 3 der Antriebsbatterie hier an der hinteren Stirnseite des Batteriegehäuses 1 angeordnet ist und die erforderlichen elektrischen Verbindungsleitungen wieder kurz ausgebildet sind.

Dargestellt ist in Fig. 1 auch das in der vorliegenden Schrift verwendete Fahrzeugkoordinatensystem mit Längsrichtung x, Querrichtung y und vertikaler Richtung z.

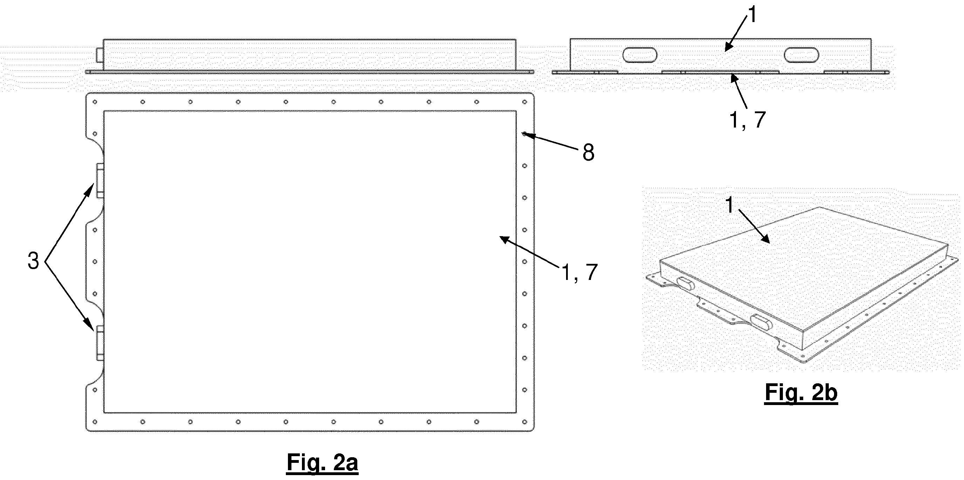

Wie in den Fig. 2 bis 5 näher dargestellt, weist die Antriebsbatterie erfindungsgemäß mehrere Querträger 4 und Längsträger 5 im Batteriegehäuse 1 auf, zur Verstärkung der Antriebsbatterie in Einbaulage in Fahrzeugquerrichtung y bzw. in Fahrzeuglängsrichtung x. Alle Querträger 4 sind symmetrisch gegenüber einer Rotation der Antriebsbatterie um eine vertikale Achse z um 180 Grad angeordnet, so dass die Querträger 4 nach einer derartigen Rotation an den selben Positionen in Fahrzeuglängsrichtung x zu liegen kommen, wie vor der Rotation.

Zusätzlich sind auch alle Längsträger 5 symmetrisch gegenüber einer Rotation der Antriebsbatterie um eine vertikale Achse z um 180 Grad angeordnet, so dass die Längsträger 5 nach einer derartigen Rotation an den selben Positionen in Fahrzeugquerrichtung y zu liegen kommen, wie vor der Rotation.

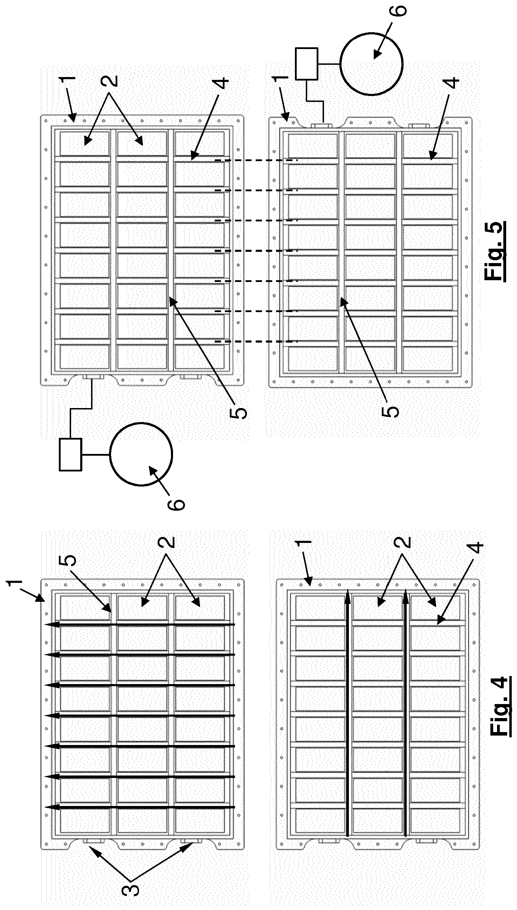

Daher bleiben bei Einbau einer derartigen Antriebsbatterie in den beiden in Fig. 1 links bzw. rechts dargestellten zu einender gedrehten Lagen, die Positionen der Querträger 4 sowie auch der Längsträger 5 unverändert. Die Lastpfade an den Quer- und Längsträgern 4, 5, eingezeichnet als Pfeile in Fig. 4, bleiben bestehen (Fig. 5). Die selbe Antriebsbatterie kann in beiden Fahrzeugvarianten verwendet werden, ohne Neuberechnung der mechanischen Eigenschaften der Verstärkungsstrukturen insbesondere des Unfallverhaltens der Verstärkungsstrukturen der Antriebsbatterie.

Fig. 2a zeigt eine derartige Antriebsbatterie von oben, von vorne und von der Seite, bzw. in Fig. 2b dreidimensional, mit einem aufgesetzten Batteriedeckel 7, der Teil des Batteriegehäuses 1 ist und beispielsweise von oben oder unten abnehmbar sein kann.

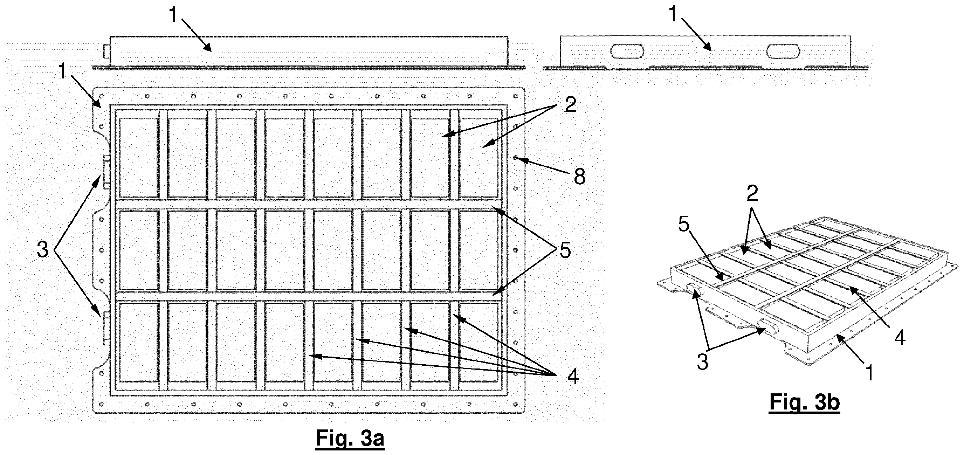

Fig. 3a und 3b zeigen die selben Ansichten der selben Antriebsbatterie wie Fig. 2a und 2b, jedoch ohne Batteriedeckel 7, wobei also der Batteriedeckel 7 abgenommen oder ausgeblendet ist.

Das Batteriegehäuse 1 weist eine Flanschfläche mit Verschraubungspunkten 8, zur Verschraubung mit dem Rohbau des Fahrzeuges auf.

Querträger 4 und Längsträger 5 bilden zusammen ein annähernd regemäßiges bzw. regelmäßiges, rechtwinkeliges Gitter, mit zueinander annähernd gleichen bzw. gleichen Abständen der Querträger 4 zueinander in Fahrzeuglängsrichtung x einerseits und mit zueinander annähernd gleichen bzw. gleichen Abständen der Längsträger 5 in Fahrzeugquerrichtung y andererseits. Ebenso sind die Querträger 4 symmetrisch zur Mitte der Antriebsbatterie in Längsrichtung beabstandet angeordnet, so dass die Querträger links und rechts der Mittelachse jeweils gleich weit von dieser entfernt sind. Die Längsträger sind analog symmetrisch zur Mitte der Antriebsbatterie in Querrichtung beabstandet angeordnet. Die Längsträger sind daher zu beiden Seiten der horizontal dargestellten Mittelachse in Längsrichtung jeweils gleich weit von dieser entfernt.

Der elektrische Anschluss 3 ist an einer Stirnseite des Batteriegehäuses 1 angeordnet, beispielsweise in Form eines oder zweier Anschlussstecker oder Anschlussklemmen für die beiden Batteriepole. Nahe des elektrischen Anschlusses 3 und / oder an der Stirnseite des Batteriegehäuses 1, auch falls dieses keinen elektrischen Anschluss aufweist weil die Übertragung der Energie beispielsweise induktiv erfolgt, kann auch ein Anschluss für ein Kühlsystem, insbesondere für einen Kühlkreislauf und / oder Heizkreislauf der Batterie angeordnet sein.

Die Batteriemodule 2 sind in Zwischenräumen zwischen den Querträgern 4 und zwischen den Längsträgern 5 angeordnet. Batteriemodule 2 und Querträger 4 sowie Längsträger 5 sind weitgehend in der selben vertikalen Höhe angeordnet.

Fig. 4 zeigt die Antriebsbatterie gemäß Fig. 3a von oben gesehen zwei mal, wobei in der oberen Darstellung die Lastpfaden über die Querträger 4 als Pfeile eingezeichnet sind und in der unteren Darstellung die Lastpfade über die Längsträger 5, an der selben Antriebsbatterie, eingezeichnet sind. Das Fahrzeug, in welche die dargestellten Antriebsbatterien aufgenommen sind, weist bevorzugt an den Enden der Querträger und/oder Längsträger, also an den Positionen der Querträger bzw. Längsträger die bei Rotation um 180 Grad erhalten bleiben, ebenfalls Verstärkungsstrukturen, wie zum Beispiel Querträger und Längsträger auf, so dass die dargestellten Lastpfade gezielt im Fahrzeug weiter geführt werden um die auftretenden Kräfte aufzunehmen bzw. abzuleiten.

Fig. 5 zeigt wieder schematisch eine Antriebsbatterie gemäß Fig. 3a von oben, und zwar in Einbaulage in einem Fahrzeug mit Frontantrieb in der oberen Darstellung und in einem Fahrzeug mit Heckantrieb in der Darstellung unten. Durch die symmetrische gleichmäßige Verteilung der Querträger 4, werden bei Drehung der Antriebsbatterie passend zum jeweiligen Antriebskonzept, gleiche Positionen für die Querträger 4 erreicht - dargestellt durch gestrichelte Linien - und somit erreicht, dass Fahrzeuge mit unterschiedlichen Antriebskonzepten (Frontantrieb, Heckantrieb oder Allradantrieb) das gleiche Seitencrash-Verhalten zeigen.

### Bezugszeichenliste

- 1: Batteriegehäuse
- 2: Batteriemodul
- 3: Anschluss bzw. Anschlüsse für Elektrik, Kühlung etc.
- 4: Querträger
- 5: Längsträger
- 6: Antriebsmotor
- 7: Batteriedeckel
- 8: Verschraubungspunkt

- x: Fahrzeuglängsrichtung
- y: Fahrzeugquerrichtung
- z: vertikale Achse

## Patentansprüche

1. Verwendung von gleichartigen Antriebsbatterien in einem ersten Kraftfahrzeug, wobei das erste Kraftfahrzeug mit einem Frontantrieb ausgestattet ist und in einem zweiten Kraftfahrzeug, wobei das zweite Kraftfahrzeug mit einem Heckantrieb ausgestattet ist, wobei die Antriebsbatterie jeweils ein Batteriegehäuse (1), mehrere Batteriemodule (2) im Batteriegehäuse (1), einen Anschluss (3) der Antriebsbatterie und zumindest einen, bevorzugt mehrere Querträger (4) im Batteriegehäuse (1) zur Verstärkung der Antriebsbatterie in Fahrzeugquerrichtung (y) umfasst, wobei die Gesamtheit der Querträger (4) symmetrisch gegenüber einer Rotation der Antriebsbatterie um eine vertikale Achse (z) um 180 Grad angeordnet ist, so dass die Querträger (4) nach einer derartigen Rotation an den selben Positionen in Fahrzeuglängsrichtung (x) zu liegen kommen, wie vor der Rotation, wobei die Antriebsbatterie im zweiten Kraftfahrzeug um eine vertikale Achse um 180 Grad gedreht ist, gegenüber der Anordnung der Antriebsbatterie im ersten Kraftfahrzeug, so dass die Querträger (4) im zweiten Kraftfahrzeug an den selben Positionen in Fahrzeuglängsrichtung (x) liegen, wie im ersten Kraftfahrzeug.

2. Verwendung nach Anspruch 1,
**dadurch gekennzeichnet, dass** alle Querträger (4) in regelmäßigen Abständen in Fahrzeuglängsrichtung (x) im Batteriegehäuse (1) angeordnet sind.

3. Verwendung nach zumindest einem der vorhergehenden Ansprüche, **dadurch gekennzeichnet, dass** die Antriebsbatterie zumindest einen, bevorzugt mehrere Längsträger (5) im Batteriegehäuse (1) zur Verstärkung der Antriebsbatterie in Einbaulage in Fahrzeuglängsrichtung (x) umfasst, wobei die Gesamtheit der Längsträger (5) symmetrisch gegenüber einer Rotation der Antriebsbatterie um eine vertikale Achse um 180 Grad angeordnet ist, so dass die Längsträger (5) nach einer derartigen Rotation an den selben Positionen in Fahrzeugquerrichtung (y) zu liegen kommen, wie vor der Rotation.

4. Verwendung nach zumindest einem der vorhergehenden Ansprüche, **dadurch gekennzeichnet, dass** alle Längsträger (5) in regelmäßigen Abständen in Fahrzeugquerrichtung (y) im Batteriegehäuse (1) angeordnet sind.

5. Verwendung nach zumindest einem der vorhergehenden Ansprüche, **dadurch gekennzeichnet, dass** die Querträger (4) und die Längsträger (5) zusammen ein regelmäßiges, rechtwinkeliges Gitter bilden, mit zueinander gleichen Abständen in Fahrzeuglängsrichtung (x) einerseits und mit zueinander gleichen Abständen in Fahrzeugquerrichtung (y) andererseits.

6. Verwendung nach zumindest einem der vorhergehenden Ansprüche, **dadurch gekennzeichnet, dass** der Anschluss (3) einen elektrischen Anschluss bildet und an einer Stirnseite des Batteriegehäuses (1) angeordnet ist und bevorzugt auch ein Kühlanschluss an der selben Stirnseite des Batteriegehäuses (1) angeordnet ist.

7. Verwendung nach zumindest einem der vorhergehenden Ansprüche, **dadurch gekennzeichnet, dass** die Batteriemodule (2) in Zwischenräumen zwischen den Querträgern (4) und gegebenenfalls zwischen den Längsträgern (5) angeordnet sind.

## Claims

1. Use of similar drive batteries in a first vehicle, the first vehicle being equipped with a front drive, and in a second vehicle, the second vehicle being equipped with a rear drive, wherein each drive battery has a battery housing (1), a plurality of battery modules (2) in the battery housing (1), a connection (3) of the drive battery and at least one crossmember (4), preferably a plurality of crossmembers (4), in the battery housing (1) for boosting the drive battery in the vehicle transverse direction (y), wherein all of the crossmembers (4) are arranged symmetrically with respect to a rotation of the drive battery about a vertical axis (z) through 180 degrees, so that after such a rotation the crossmembers (4) come to rest in the same positions in the vehicle longitudinal direction (x) as before the rotation, wherein the drive battery in the second vehicle is rotated about a vertical axis through 180 degrees, with respect to the arrangement of the drive battery in the first vehicle, so that the crossmembers (4) in the second vehicle lie in the same positions in the vehicle longitudinal direction (x) as in the first vehicle.

2. Use according to Claim 1,
**characterized in that** all of the crossmembers (4) are arranged in the battery housing (1) at regular distances in the vehicle longitudinal direction (x).

3. Use according to at least one of the preceding claims,
**characterized in that** the drive battery comprises at least one longitudinal member (5), preferably a plurality of longitudinal members (5), in the battery housing (1) for boosting the drive battery in the installation position in the vehicle longitudinal direction (x), wherein all of the longitudinal members (5) are arranged symmetrically with respect to a rotation of the drive battery about a vertical axis through 180 degrees, so that after such a rotation the longitudinal members (5) come to rest in the same positions in the vehicle transverse direction (y) as before the rotation.

4. Use according to at least one of the preceding claims,
**characterized in that** all of the longitudinal members (5) are arranged in the battery housing (1) at regular distances in the vehicle transverse direction (y).

5. Use according to at least one of the preceding claims,
**characterized in that** the crossmembers (4) and the longitudinal members (5) together form a regular, right-angled grid, with equal distances with respect to one another in the vehicle longitudinal direction (x) on the one hand and with equal distances with respect to one another in the vehicle transverse direction (y) on the other hand.

6. Use according to at least one of the preceding claims,
**characterized in that** the connection (3) forms an electrical connection and is arranged on an end side of the battery housing (1) and a cooling connection is preferably also arranged on the same end side of the battery housing (1).

7. Use according to at least one of the preceding claims,
**characterized in that** the battery modules (2) are arranged in intermediate spaces between the crossmembers (4) and possibly between the longitudinal members (5).

## Revendications

1. Utilisation de batteries de traction de même type dans un premier véhicule automobile, le premier véhicule automobile étant équipé d'une traction avant, et dans un deuxième véhicule automobile, le deuxième véhicule automobile étant équipé d'une traction arrière, dans lequel la batterie de traction comprend respectivement un carter de batterie (1), plusieurs modules de batterie (2) dans le carter de batterie (1), un raccord (3) de la batterie de traction et au moins une, de préférence plusieurs traverses (4) dans le carter de batterie (1) pour renforcer la batterie de traction dans le sens transversal du véhicule (y), dans lequel la totalité des traverses (4) est disposée de manière symétrique par rapport à une rotation de 180 degrés de la batterie de traction autour d'un axe vertical (z) de sorte que les traverses (4) se trouvent après une telle rotation dans les mêmes positions dans le sens longitudinal du véhicule (x) qu'avant la rotation, dans lequel la batterie de traction dans le deuxième véhicule automobile est tournée de 180 degrés autour d'un axe vertical par rapport à la disposition de la batterie de traction dans le premier véhicule automobile de sorte que les traverses (4) dans le deuxième véhicule automobile se trouvent dans les mêmes positions dans le sens longitudinal du véhicule (x) que dans le premier véhicule automobile.

2. Utilisation selon la revendication 1, **caractérisée en ce que** toutes les traverses (4) sont disposées dans le carter de batterie (1) à intervalles réguliers dans le sens longitudinal du véhicule (x).

3. Utilisation selon au moins l'une des revendications précédentes, **caractérisée en ce que** la batterie de traction comprend au moins un, de préférence plusieurs longerons (5) dans le carter de batterie (1) pour renforcer la batterie de traction dans la position d'installation dans le sens longitudinal du véhicule (x), dans lequel la totalité des longerons (5) est disposée de manière symétrique par rapport à une rotation de 180 degrés de la batterie de traction autour d'un axe vertical de sorte que les longerons (5) se trouvent après une telle rotation dans les mêmes positions dans le sens transversal du véhicule (y) qu'avant la rotation.

4. Utilisation selon au moins l'une des revendications précédentes, **caractérisée en ce que** tous les longerons (5) sont disposés dans le carter de batterie (1) à intervalles réguliers dans le sens transversal du véhicule (y).

5. Utilisation selon au moins l'une des revendications précédentes, **caractérisée en ce que** les traverses (4) et les longerons (5) forment ensemble une grille rectangulaire régulière avec des intervalles identiques les uns aux autres dans le sens longitudinal du véhicule (x) d'une part et avec intervalles identiques les uns aux autres dans le sens transversal du véhicule (y) d'autre part.

6. Utilisation selon au moins l'une des revendications précédentes, **caractérisée en ce que** le raccord (3) forme un raccord électrique et est disposé sur une face frontale du carter de batterie (1), et de préférence un raccord de refroidissement est également disposé sur la même face frontale du carter de batterie (1).

7. Utilisation selon au moins l'une des revendications précédentes, **caractérisée en ce que** les modules de batterie (2) sont disposés dans des espaces entre les traverses (4) et le cas échéant entre les longerons (5).
